(19) Europäisches Patentamt / European Patent Office / Office européen des brevets

(11) **EP 4 752 836 A1**

(12) **EUROPEAN PATENT APPLICATION**
published in accordance with Art. 153(4) EPC

(43) Date of publication:
**03.06.2026 Bulletin 2026/23**

(21) Application number: **24890368.4**

(22) Date of filing: **08.10.2024**

(51) International Patent Classification (IPC):
**G06T 11/00** (2026.01)  **G06V 10/774** (2022.01)
**G06N 3/0455** (2023.01)

(86) International application number:
**PCT/CN2024/123335**

(87) International publication number:
**WO 2025/103010 (22.05.2025 Gazette 2025/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.11.2023  CN 202311546177**

(71) Applicant: **Tencent Technology (Shenzhen)
Company Limited
Shenzhen, Guangdong 518057 (CN)**

(72) Inventors:
• **SHEN, Lei**
  **Shenzhen, Guangdong 518057 (CN)**
• **JIN, Jianlong**
  **Shenzhen, Guangdong 518057 (CN)**
• **ZHANG, Ruixin**
  **Shenzhen, Guangdong 518057 (CN)**
• **ZHANG, Jingyun**
  **Shenzhen, Guangdong 518057 (CN)**
• **DING, Shouhong**
  **Shenzhen, Guangdong 518057 (CN)**

(74) Representative: **AWA Sweden AB
Box 5117
200 71 Malmö (SE)**

(54) **PALMPRINT IMAGE GENERATION METHOD AND APPARATUS, DEVICE, STORAGE MEDIUM, AND PROGRAM PRODUCT**

(57) Embodiments of the present application provide a palmprint image generation method and apparatus, a device, a storage medium, and a program product. The method comprises: determining a plurality of control points on the basis of a predetermined palmprint curve template, and generating a Bézier curve on the basis of the plurality of control points; on the basis of the Bézier curve, generating a palm crease energy map having crease information, the palm crease energy map com-prising a palm crease having a crease distribution same as that of the Bézier curve and a crease type different from that of the Bézier curve, wherein the crease type is used for describing the crease information and corresponds to crease direction energy of each pixel on the palm crease; and on the basis of the palm crease energy map, generating a photorealistic palmprint image having detailed texture information .

200

```
S201 → Determine a plurality of control points based on a pre-set palm print curve
       template, and generate a set of Bezier curves based on the plurality of control
       points

S202 → Generate a palm crease energy image based on the set of Bezier curves, the
       palm crease energy image including a set of palm creases having a same line
       distribution as the set of Bezier curves and a different line shape from the set
       of Bezier curves, and the line shape depending on line orientation energy of
       each pixel on the set of palm creases

S203 → Generate a palm print image having detailed texture information based on the
       palm crease energy image
```

FIG. 2

**Description**

RELATED APPLICATION

This disclosure claims priority to Chinese Patent Application No. 202311546177.7, filed with the China National Intellectual Property Administration on November 17, 2023 and entitled "METHOD FOR GENERATING A PALM PRINT IMAGE AND APPARATUS, DEVICE, AND STORAGE MEDIUM".

FIELD OF THE TECHNOLOGY

This disclosure relates to the field of artificial intelligence, and more specifically, to a method for generating a palm print image and apparatus, a device, a storage medium, and a program product.

BACKGROUND OF THE DISCLOSURE

In the field of palm print recognition, a large-scale palm print data set that can be used for training and evaluation is very limited. Consequently, this case severely hinders development and performance improvement of a palm print recognition technology. A palm print refers to a skin texture in a palm of a human, has uniqueness and stability, and may be used for individual identification, identity authentication, and the like. However, because it is complex and time-consuming to obtain and mark palm print data for model training, a quantity of available palm print data sets is limited, especially a large-scale data set.

In fields such as deep learning, a data volume may affect training and performance of a model. The large-scale data set may provide more samples and variations, which helps the model to learn and generalize better. However, due to a lack of the large-scale palm print data set, performance of a deep learning method in palm print recognition may be limited.

Although a scarcity of the large-scale palm print data set is a challenge, user privacy would still be protected when the large-scale palm print data set is collected. The palm print is a part of personal physical features, and has sensitivity and privacy. Therefore, when the palm print data is collected and used, proper security measures may be used to protect the user privacy.

Therefore, an efficient method for generating a palm print image is needed, so that diversified and vivid palm print images can be generated, and user privacy is protected.

SUMMARY

To address the foregoing issues, in this disclosure, a new palm crease energy (PCE) domain is introduced. First, a set of Bezier curves is converted to the palm crease energy domain, to generate a palm crease energy image with a set of vivid creases, and then a palm print image having vivid textures is generated based on the palm crease energy image, thereby enabling the generation of diversified and vivid palm print images.

Embodiments of this disclosure provide a method for generating a palm print image and apparatus, a device, a storage medium, and a program product.

According to an aspect, an embodiment of this disclosure provides a method for generating a palm print image, executable by an electronic device, and the method includes:

determining a plurality of control points based on a pre-set palm print curve template, and generating a set of Bezier curves based on the plurality of control points;

generating a palm crease energy image based on the set of Bezier curves, the palm crease energy image comprising a set of palm creases having a same line distribution as the set of Bezier curves and a different line shape from the set of Bezier curves, and the line shape depending on line orientation energy of each pixel on the set of palm creases; and

generating a palm print image having detailed texture information based on the palm crease energy image.

According to another aspect, an embodiment of this disclosure provides an apparatus for generating a palm print image, and the apparatus includes:

a curve generation module, configured to determine a plurality of control points based on a pre-set palm print curve template, and generating a set of Bezier curves based on the plurality of control points;

a crease generation module, configured to generate a palm crease energy image based on the set of Bezier curves, the palm crease energy image comprising a set of palm creases having a same line distribution as the set of Bezier curves and a different line shape from the set of Bezier curves, and the line shape depending on line orientation energy of each pixel on the set of palm creases; and

a texture generation module, configured to generate a palm print image having detailed texture information based on the palm crease energy image.

According to another aspect, an embodiment of this disclosure provides an electronic device, including: at least one processors; and at least one memories, the at least one memories having a computer-executable program stored therein, and the computer-executable program, when executed by the at least one processors, performing the method for generating a palm print image described above.

According to another aspect, an embodiment of this disclosure provides a computer-readable storage medium, having computer-executable instructions stored therein, the instructions, when executed by a processor, being configured to implement the method for generating a palm print image described above.

According to another aspect, an embodiment of this disclosure provides a computer program product or a computer program, the computer program product or the computer program including computer instructions, and the computer instructions being stored in a computer-readable storage medium. A processor of the computer device reads the computer instructions from the computer-readable storage medium, and the processor executes the computer instructions, so that the computer device performs the method for generating a palm print image according to the embodiments of this disclosure.

BRIEF DESCRIPTION OF THE DRAWINGS

FIG. 1 is a schematic diagram showing a significant difference between a Bezier curve and a real palm print in terms of crease distribution and texture.

FIG. 2 is a flowchart of a method for generating a palm print image according to an embodiment of this disclosure.

FIG. 3 is a schematic diagram of a palm print image generation system according to an embodiment of this disclosure.

FIG. 4A is a schematic diagram of an example of a palm print curve template according to an embodiment of this disclosure.

FIG. 4B is a schematic diagram of comparison between a Gaussian-MFRAT core and an MFRAT filter according to an embodiment of this disclosure.

FIG. 5 is a schematic diagram of field conversion at jointly training according to an embodiment of this disclosure.

FIG. 6 is a schematic diagram of a first generation stage at jointly training according to an embodiment of this disclosure.

FIG. 7 is a schematic diagram of a palm crease energy extractor according to an embodiment of this disclosure.

FIG. 8 is a schematic diagram of a second generation stage at jointly training according to an embodiment of this disclosure.

FIG. 9 is a comparison diagram of palm print generation results by using different palm print generation methods according to an embodiment of this disclosure.

FIG. 10 is a diagram of a result of validity verification for a line feature enhancement block according to an embodiment of this disclosure.

FIG. 11 is a schematic diagram of an apparatus for generating a palm print image according to an embodiment of this disclosure.

FIG. 12 is a schematic diagram of an electronic device according to an embodiment of this disclosure.

FIG. 13 is a schematic diagram of an architecture of an exemplary computing device according to an embodiment of this disclosure.

DESCRIPTION OF EMBODIMENTS

To make objectives, technical solutions, and advantages of this disclosure more obvious, exemplary embodiments according to this disclosure are described in detail below with reference to the accompanying drawings. Apparently, the described embodiments are merely some but not all of the embodiments of this disclosure. This disclosure is not limited to the exemplary embodiments described herein.

In this specification and the accompanying drawings, operations and elements that are basically the same or similar are represented by using the same or similar reference signs, and repeated descriptions of these operations and elements are omitted. In addition, in the descriptions of this disclosure, the terms such as "first" and "second" are only configured to distinguish descriptions, and cannot be understood as indicating or implying relative importance or ranking.

Unless otherwise defined, meanings of all technical and scientific terms used in this specification are the same as those usually understood by a person skilled in the art to which this disclosure belongs. Terms used in this specification are merely intended to describe objectives of the embodiments of the present disclosure, but are not intended to limit the present disclosure.

For ease of describing this disclosure, concepts related to this disclosure are described below.

A method for generating a palm print image in this disclosure may be implemented based on artificial intelligence (AI). The artificial intelligence uses a digital computer or a machine controlled by a digital computer to simulate, elongate, and extend human intelligence, so that the machine has functions of perception, reasoning, and decision. Specifically, in this embodiment of this disclosure, the artificial intelligence researches design principles and implementation methods of various intelligent machines, causing the method for generating a palm print image in this disclosure to implement the following function: generating a palm print image with a set of vivid creases and a set of vivid textures based on control points determined from a palm print curve template.

The method for generating a palm print image in this disclosure may further be implemented based on a computer vision (CV) technology. The computer vision technology can obtain information from an image or multi-dimensional data. Specifically, in the method for generating a palm print image in this disclosure, a palm crease energy image having a style close to a style of a real palm print may be generated from a set of Bezier curves by using the CV technology, and then a palm print image having diversified texture information is generated based on the palm crease energy image, to output diversified palm print images, to be used, for example, in a pre-training process of a palm print recognition model.

The method for generating a palm print image in this disclosure may be implemented based on the set of Bezier curves. The set of Bezier curves is configured for describing a set of smooth curves. In this embodiment of this disclosure, the set of Bezier curves may be applied to drawing of a set of palm creases. A feature of a Bezier curve is that a shape of the curve may be controlled through the control points. Therefore, a bending degree of a palm crease and the shape of the corresponding curve may be adjusted through the control points. Specifically, the palm may be divided into several segments, each segment is described by using corresponding Bezier curves, and palm creases of different shapes may be obtained by adjusting positions and a quantity of the control points.

In conclusion, the solutions provided in the embodiments of this disclosure relate to technologies such as artificial intelligence and computer vision. The following further describes the embodiments of this disclosure with reference to the accompanying drawings.

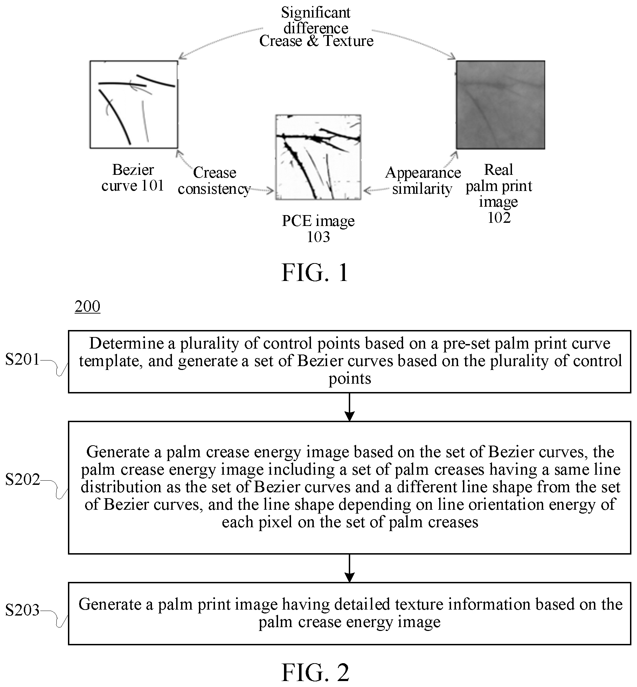

FIG. 1 is a schematic diagram showing a significant difference between a set of Bezier curves and a real palm print in terms of crease distribution and texture.

As a stable and privacy-friendly biometric feature recognition technology, a palm print has recently shown a great potential in recognition application. In recent years, a deep learning based-palm print recognition method becomes a mainstream palm print recognition technology. According to the deep learning-based palm print recognition method, a neural network is trained to extract a feature of the palm print having improved classification or pairing loss. However, a main difficulty in research and application of the deep learning-based palm print recognition method lies in a scarcity of a large-scale palm print data set, and collecting the large-scale palm print data set may cause a risk of violating user privacy. To overcome this problem, currently, researchers may generate simulated palm print data through some data synthesis technologies, to expand a data set.

Currently, some palm print generation methods are applied to generate a pseudo palm print sample in the field of palm print recognition. For example, in a Bezier palm print generation method, a set of pseudo palm creases is synthesized by using a parameterized Bezier curve. However, as shown in FIG. 1, a Bezier palm print, shown by Bezier curve 101 including a set of Bezier curves, generated through the Bezier palm print generation method significantly differs from a real palm print image 102 in terms of crease and texture, and cannot reflect crease distribution of the real palm print, nor can present various detailed textures in the real palm print. Therefore, the Bezier palm print still needs a specific amount of real palm print data for fine adjustment.

In addition, when sample data is limited, a generative adversarial network (GAN)-based model usually faces with challenges of overfitting of a discriminator and unbalance between a discrete data space and continuous hidden distribution. These problems lead to reduced fidelity and an unstable training process.

In addition, some methods using few samples, such as data enhancement, regularization, and transfer learning, lack identity controllability during generation of the palm print.

Based on this, an embodiment of this disclosure provides a method of using an intermediate domain connecting a Bezier palm print domain and a real palm print image domain, where a new palm crease energy (PCE) domain is introduced as the intermediate domain. First, the set of Bezier curves is converted to the palm crease energy domain, to generate a palm crease energy image (PCE image for short) having vivid creases, and then a palm print image having a set of vivid textures is generated based on the palm crease energy image, thereby obtaining diversified and vivid palm print images.

As shown in FIG. 1, a PCE image 103, as a middle state close to the real palm print, has crease consistency with the set of Bezier curves (or referred to as Bezier curve 101), that is, line distribution of a set of creases (that is, the set of palm creases) of the PCE image 103 is consistent with the Bezier curve 101, and has appearance similarity with a real palm print image 102, that is, an appearance of a set of palm creases of the PCE image 103 is consistent with an appearance of a set of real palm creases.

In the method provided in this embodiment of this disclosure, compared with a conventional palm print generation method, a Bezier-Real difference is decomposed into a crease difference and a texture difference, thereby reducing generation difficulty. Specifically, the palm crease energy domain is introduced to decouple generation of the crease and the texture of the palm print, so that the Bezier curve of the Bezier palm print domain is converted to the palm crease energy image of the palm crease energy domain, to generate a vivid crease, and the palm crease energy image of the palm crease energy domain is converted into the palm print image of the palm print image domain, to generate a vivid texture, thereby reducing difficulty in generating the palm print image from the Bezier curve, and generating diversified palm print images.

In the method provided in this embodiment of this disclosure, the Bezier curve is generated by using control points determined from a pre-set palm print curve template, and the Bezier curve is converted to a palm crease energy image having crease information, the crease information including a palm crease having the same line distribution as the Bezier curve and a different line shape from the set of Bezier curves, and the line shape being determined by a line energy feature of each pixel. Then, a palm print image having texture information is further generated based on the palm crease energy image having the crease information, and the palm crease of the palm print image is consistent with the crease information of the palm crease energy image, thereby reducing difficulty in generating the palm print image from the set of Bezier curves, and generating diversified palm print images.

In the method provided in this embodiment of this disclosure, the set of Bezier curves is generated by using control points determined from a pre-set palm print curve template, and the set of Bezier curves is converted to a palm crease energy image having crease information, the crease information including a set of palm creases having the same line distribution as the set of Bezier curves and different line shapes (e.g., different line stroke properties). In some examples, the line shapes (e.g., line stroke properties) may be determined by a line energy feature of each pixel. Then, a palm print image having texture information is further generated based on the palm crease energy image having the crease information, and the set of palm creases of the palm print image is consistent with the crease information of the palm crease energy image, thereby generating a palm print image having a set of vivid creases and vivid textures.

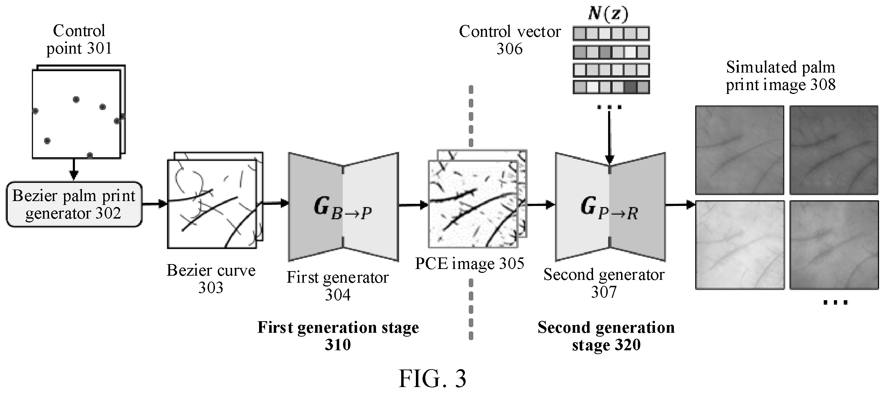

FIG. 2 is a flowchart of a method for generating a palm print image 200 according to an embodiment of this disclosure. FIG. 3 is a schematic diagram of a palm print image generation system according to an embodiment of this disclosure.

As shown in FIG. 3, in this embodiment of this disclosure, the palm print image generation system may include a first generation stage 310 related to a first generator 304, and a second generation stage 320 related to a second generator 307. The first generation stage 310 and the second generation stage 320 use a PCE image 305 of a PCE domain as a connection.

At the first generation stage 310, a Bezier palm print generator 302 generates a set of Bezier curves (also referred to as Bezier curve 303) based on control points 301, and the first generator 304 generates the PCE image 305 based on the Bezier curve 303.

At the second generation stage 320, the second generator 307 generates a simulated palm print image 308 based on the PCE image 305 and a control vector 306. The following describes the generation process in detail with reference to FIG. 2 to FIG. 4A.

First, as shown in FIG. 2, operation S201: Determine a plurality of control points based on a pre-set palm print curve template, and generate a set of Bezier curves based on the plurality of control points.

In some embodiments, because the set of Bezier curves is a set of curves generated based on the plurality of control points, in this embodiment of this disclosure, the method for generating a palm print image may use prior knowledge obtained from a human skin texture to improve a control point generation mechanism, for example, improve the palm print curve template configured to generate the control points.

According to this embodiment of this disclosure, the palm print curve template may include a plurality of a set of real palm creases and be pre-determined based on statistics obtained from a set of real palm creases of a human. Because diversity and individual differences of real palm prints of humans are both considered, the determined palm print curve template is more representative. Therefore, a generation range of the control points determined based on the palm print curve template is more accurate, so that a set of Bezier curves closer to distribution of a set of real palm creases may be generated. In embodiments of the present disclosure, control points are a set of points used to define or control a shape of a curve. Modifying positions of control points allows precise control over the curve's form and structure. The control points may be determined by sampling at least one region within the palm print curve template. Not all the control points may locate in the set of real palm creases. Some control points may locate in at least one real palm crease, others may not locate in any real palm crease.

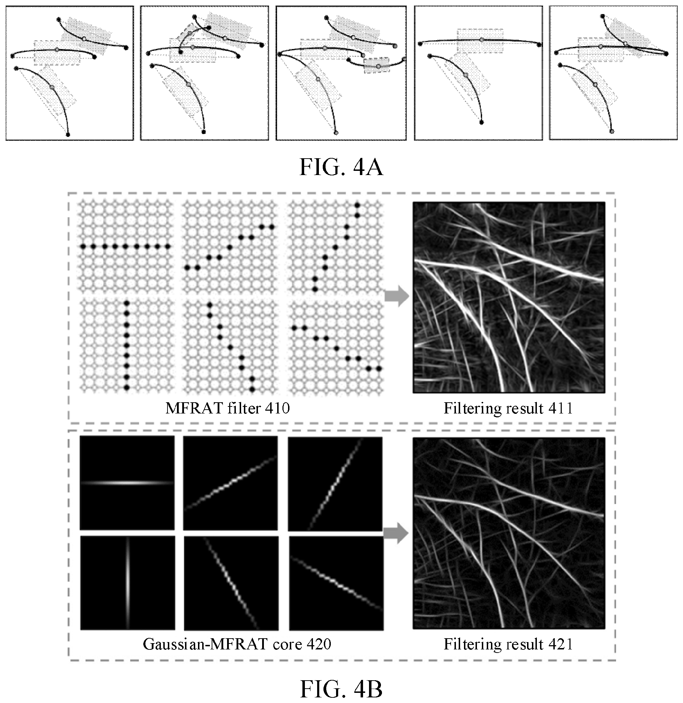

FIG. 4A is a schematic diagram of an example of a palm print curve template according to an embodiment of this disclosure. As shown in FIG. 4A, five examples of the palm print curve templates obtained based on statistics obtained from a set of real palm creases of a human are provided, and respectively correspond to five most representative human palm crease distributions. In the five examples of the palm print curve templates, each example of the palm print curve template includes several regions, of which each region refers to a generation range for control points, as shown by a dashed-line box. Different examples of the palm print curve templates may have different quantities of palm creases, and therefore may be determined by using different quantities of regions (or generation ranges) and control points.

The examples of the palm print curve templates in FIG. 4A are not used as limitations to the palm print curve template configured to generate the control points in this disclosure. Various other palm print curve templates may alternatively be used in this disclosure.

According to this embodiment of this disclosure, the determining a plurality of control points based on a pre-set palm print curve template may include:

generating, based on the palm print curve template, regions for the plurality of control points, each region having its range; and

sampling the regions to obtain the plurality of control points, a control point being a sampled pixel within the range of the regions.

For example, a sampling method may include a method such as random sampling, to add randomness and an individual difference while retaining a shape and a style of the palm print, so that generated palm print images are more real and diversified. Other sampling methods may alternatively be used to achieve different data generation effects. This is not limited in this disclosure. As shown in Fig. 4A, the set of Bezier curves are generated by connecting adjacent control points to span across each region.

Therefore, the palm print curve template is generated based on statistics obtained based on a set of real palm creases of a human, and these palm print curve templates can provide a more accurate generation range of the control points, so that the set of Bezier curves generated based on these control points is closer to distribution of a real crease, thereby reducing a difference between the generated palm print and the real palm print.

Next, operation S202: Generate a palm crease energy image based on the set of Bezier curves, the palm crease energy image including a set of palm creases having a same line distribution as the set of Bezier curves and a different line shape from the set of Bezier curves, and the line shape depending on line orientation energy of each pixel on the set of palm creases. In embodiments of the disclosure, the palm crease energy image includes crease information, and the line shape is configured for describing the crease information and corresponding to line orientation energy of each pixel on the set of palm creases. For example, feature extraction is performed by processing circuitry on the set of Bezier curves, to obtain a feature map of the set of Bezier curves. A palm crease energy image that includes a set of palm creases is generated based on the feature map. In some examples, the set of palm creases has a line distribution corresponding to a line distribution of the set of Bezier curves, and has a line shape (or line stroke properties) corresponding to line orientation energy of each pixel on the set of palm creases. The line shape may be determined by line energy features of pixels on the set of palm creases, and the line energy feature of a pixel may be determined by line orientation energy of the pixel in the plurality of pre-determined directions.

In some embodiments, as shown in FIG. 3, at the first generation stage corresponding to operation S202, the Bezier curve 303 may be converted to the PCE domain, to generate the PCE image (that is, the palm crease energy image) 305. Both the Bezier curve 303 and the PCE image 305 are line-based binary images. An objective of the first generation stage is to convert a curve line into the Bezier palm print image into a PCE image having a set of creases (that is, the set of palm creases) closer to a real palm print of a human.

The set of creases (that is, the set of palm creases) may refer to a deep, shallow, raised, or recessed line in the set of palm creases, is usually formed because of folding and bending of the skin, is configured for describing an entire shape of the palm print, for example, a main texture and a curved edge of the palm, and plays a role of dividing and defining different regions in the palm print. The shape (e.g., line stroke properties) and distribution of the set of palm creases may be used in a field such as individual identity identification.

Therefore, compared with the set of Bezier curves, the PCE image may include a set of palm creases with same line distribution (that is, positions and directions of main textures of the palm print are the same), but the set of palm creases in the PCE image have different line shapes (for example, lines with different thicknesses and depths), to simulate a crease of a real palm print of a human.

In some embodiments, different line shapes used on the set of palm creases may depend on a line energy feature of a pixel at a corresponding position on the set of palm creases. The line energy feature of each pixel may be obtained by performing line energy feature enhancement on the set of Bezier curves, and may describe a direction distribution situation of the line energy feature at the pixel.

Specifically, according to this embodiment of this disclosure, the generating a palm crease energy image based on the set of Bezier curves may include:

performing feature extraction on the set of Bezier curves, to obtain a multi-channel feature map (i.e., a feature map of multiple channels) of the set of Bezier curves;

determining a line energy feature of each pixel in each per-channel feature map (i.e., a feature map of each channel) based on the multi-channel feature map;

generating, by enhancing the line energy feature of each pixel, an enhanced multi-channel feature map; and

generating the palm crease energy image based on the enhanced multi-channel feature map.

For example, the set of Bezier curves has N channels. A feature map of each channel may be obtained by processing the set of Bezier curves into a multi-dimensional matrix. For example, a feature map of an $i^{th}$ channel may be represented as a three-dimensional matrix $X_i \in R^{h \times w \times c}$, $i = 1, \dots, N$. Then, line energy feature enhancement may be performed on the feature map on each channel, so that a crease generation process focuses on the line energy feature.

In some embodiments, the line energy feature enhancement may include: for the feature map on each channel, subtracting an average value of all features in the feature map, to obtain a high frequency component feature in the feature map, and extracting the line energy feature from the high frequency component feature.

According to this embodiment of this disclosure, the determining a line energy feature of each pixel in each per-channel feature map based on the multi-channel feature map may include:

extracting line orientation energy of each pixel from the respective per-channel feature map by using a linear convolution layer, the linear convolution layer comprising a Gaussian modified finite Radon transform core (or core) in each of a plurality of pre-determined directions, and the line orientation energy comprising line orientation energy of the respective pixel in the plurality of pre-determined directions; and

obtaining the line energy feature of each pixel based on the line orientation energy, the line energy feature comprising maximum line orientation energy of the respective pixel among the plurality of pre-determined directions and a pre-determined direction corresponding to the maximum line orientation energy.

For example, the linear convolution layer may include several Gaussian modified finite Radon transform (MFRAT) cores in different directions (that is, the foregoing plurality of pre-determined directions).

Then, the line energy feature of the feature map may be obtained based on a maximum response operation. Specifically, for each pixel in the feature map, maximum line orientation energy of the pixel in the plurality of pre-determined directions and a pre-determined direction corresponding to the maximum line orientation energy are selected as the line energy feature of the pixel.

In the palm print image, the palm crease usually has a specific direction feature, and the line orientation energy may be configured to describe line orientation information at different pixels in the palm print image. For example, the line orientation information at different pixels (or specific regions) is quantized, and the line orientation information is converted to a group of value features configured to represent the line orientation energy of the pixel.

In addition, considering that a size of the Gaussian-MFRAT core is usually very large, in this embodiment of this disclosure, Gaussian-MFRAT core-based dilated convolution may be used to reduce calculation and time costs. In embodiments of this disclosure, a Gaussian core refers to a matrix with weights that are radially symmetric and generated by a Gaussian function, used for smoothing and denoising, which is essentially a low-pass filter. A MFRAT core refers to a convolutional core that is multi-scale, multi-directional, and incorporates residual or attention mechanisms, designed to simultaneously capture contextual information across different scales and orientations. The dilated convolution means inserting "holes" (i.e., zeros) between the elements of the convolution core to enlarge the receptive field without increasing the number of parameters.

Finally, the line energy feature of the feature map may be multiplied by a pre-set learning parameter S, and a product is added to an original feature map, to obtain a feature map of an enhanced line energy feature.

In some embodiments, the Gaussian-MFRAT core may be obtained through improvement based on an MFRAT method. First, a Gaussian core is applied to the input feature map for smoothing preprocessing, and the result is then passed to the MFRAT convolution layer. This is equivalent to adding a low-pass filtering step before the MFRAT convolution. For example, specifically, FIG. 4B is a schematic diagram of comparison between a Gaussian-MFRAT core 420 and an MFRAT filter 410 according to an embodiment of this disclosure.

The MFRAT method uses a linear filter having a constant value, and is sensitive to noise or a small change. The Gaussian-MFRAT core in this disclosure is calculated as follows:

$$f(x,y) = \frac{1}{\sqrt{2\pi}\sigma} \exp\left(\frac{\|\left((x-x_0),(y-y_0)\right)\|_\infty^2}{2\sigma^2}\right) \qquad (1)$$

where $(x, y) \in L(\theta)$ represents coordinates on the core, $(x_0, y_0)$ represents a central point of the core, $L(\theta)$ represents a line whose angle defined on a two-dimensional image plane is $\theta$ (as shown by white lines on a black background in FIG. 4B), and $\sigma$ is a hyper-parameter. In addition, when $(x, y) \notin L(\theta)$, $f(x,y)=0$. For example, in this embodiment of this disclosure, 12 Gaussian-MFRAT cores may be designed, a size of the 12 Gaussian-MFRAT cores is $31\times31$, $\theta$ is in a range of 0° to 165°, and an interval is 15°.

As shown in FIG. 4B, the line orientation energy may be extracted from the feature map in these different pre-determined directions by using the Gaussian-MFRAT core 420 in different pre-determined directions (for example, six different pre-determined directions shown by lower left white lines in FIG. 4B). The line energy feature of each pixel in the feature map includes the maximum line orientation energy selected from the line orientation energy in these different pre-determined directions.

FIG. 4B further shows filtering results 411 and 421 for the line energy feature generated based on the MFRAT filter and the Gaussian-MFRAT core. Compared with the filtering result 411 of the MFRAT filter, a line energy feature extraction result (that is, the filtering result 421) based on the Gaussian-MFRAT core is more observable, and has less noise.

Therefore, the Gaussian-MFRAT core 420 may be used to replace the MFRAT filter 410, thereby avoiding using an inefficient response suppression denoising strategy in the MFRAT filter 410, simplifying an enhancement operation of the line energy feature, and further implementing differentiability of the enhancement operation.

Therefore, for example, for a feature map $X_i$ on the $i^{th}$ channel in a multi-channel feature map $X$, line energy feature of the feature map $X_i$ is enhanced, and may be calculated as follows:

$$f_{LFEB}(X_i) = X_i + s_i f_{MAX}\{w_{G-MFRAT}^k * (X_i - \mu_i)\}_{k=1}^{N_k} \qquad (2)$$

where $\mu_i$ represents an average value of $X_i$, $f_{MAX}$ represents a maximum response operation, $w_{G-MFRAT}^k$ represents a $k^{th}$ Gaussian-MFRAT core, a total quantity of Gaussian-MFRAT cores is $N_k$, for example, is set to 12, and $s_i$ represents a pre-set learning parameter of the $i^{th}$ channel, and is configured to adjust a feature enhancement degree of the $i^{th}$ channel.

Therefore, at the first generation stage, a PCE image having a set of vivid palm creases (that is, the set of creases) may be generated based on the set of Bezier curves. The set of palm creases is represented as different line shapes depending on the line energy feature of each pixel.

According to this embodiment of this disclosure, the line orientation energy of each pixel in the set of palm creases may include line orientation energy of the pixel in all directions. In some embodiments, the line orientation energy of each pixel in all directions may be determined based on a feature enhanced multi-channel feature map of the set of Bezier curves, and these line orientation vectors may be represented by using different line shapes, thereby simulating the real crease.

According to this embodiment of this disclosure, the generating a palm crease energy image having crease information based on the set of Bezier curves may include: generating the palm crease energy image based on the set of Bezier curves by using a first generator trained in advance.

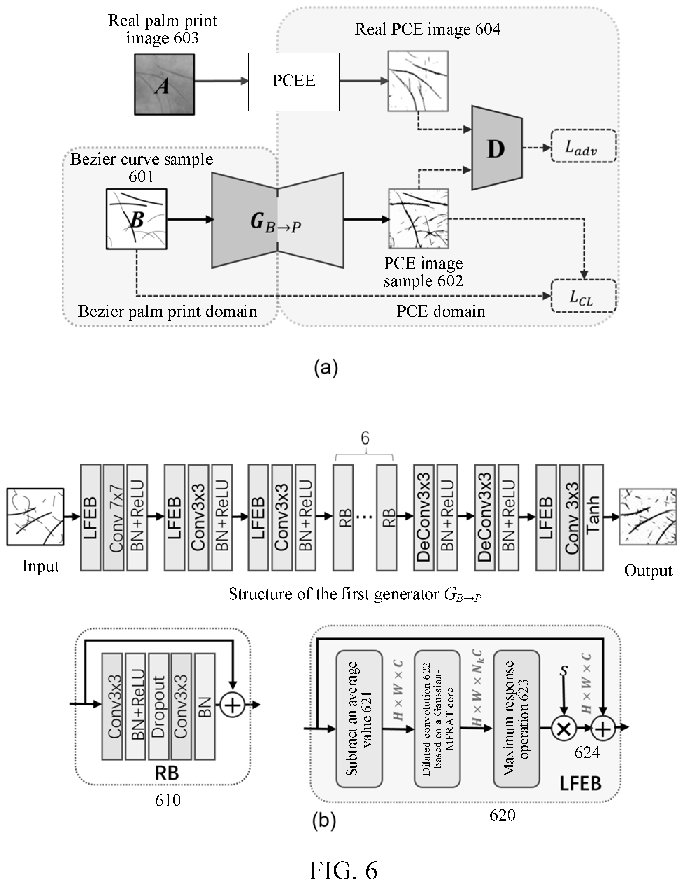

In some embodiments, as shown in FIG. 3, a first generator 304 $G_{B \to P}$ may be used to convert the Bezier curve domain (B) into the PCE domain (P), a main structure of $G_{B \to P}$ may include a residual block (RB)-based encoder-decoder network, and a specific structure and operation of the encoder-decoder network are described below with reference to FIG. 6.

After the PCE image having the crease information in the PCE domain is generated, operation S203: Generate a palm print image having detailed texture information based on the palm crease energy image.

In this operation, the palm print image has a set of palm creases consistent with the palm crease energy image, and has the detailed texture information. The generated palm print image may be a simulated palm print image compared with a real palm print image.

In some embodiments, at the second generation stage, retained crease content may be decoupled from a generated detailed texture.

According to this embodiment of this disclosure, the generating a palm print image based on the palm crease energy image may include: generating, by using a plurality of control vectors, the palm print image having a plurality of pieces of detailed texture information based on the palm crease energy image. The control vectors are configured to increase diversity among generated images.

The set of palm creases in the palm crease energy image, as identity information, is configured for indicating an identity of the palm print image. In other words, the palm print image having the detailed texture information may be generated when the set of palm creases in the palm crease energy image is retained. Retaining the set of palm creases in the palm crease energy image may be explained as retaining consistent identity information because the set of palm creases may be configured for indicating an identity (ID).

According to this embodiment of this disclosure, the detailed texture information may be configured for describing a fine texture feature in the palm print. For example, the detailed texture information may include at least one of light information, shadow information, and skin texture information.

The skin texture information may include a spot, a fine texture, and the like on the skin. The skin texture information is usually formed based on factors such as fine details of the skin, an arrangement of skin cells, and an organization structure, and may be used for generating a more vivid palm print image.

In addition, in addition to the skin texture information, the detailed texture information may further include information related to a style of the palm print image, such as light and shadow information of the generated palm print image, to generate diversified palm print images.

In some embodiments, generation of the detailed texture information may be implemented by using the control vector.

According to this embodiment of this disclosure, the control vector may be a random noise vector. As shown in FIG. 3, the control vector 306 may participate in generation from the PCE image 305 to the simulated palm print image 308. In addition, in some embodiments, the control vector may be a random noise (for example, white Gaussian noise conforming to standard normal distribution) vector, to control generation of diversified palm print images at the second generation stage.

In addition to the foregoing random noise, a control vector in another form may also be generated, to generate diversified palm prints. This is not limited in this disclosure.

According to this embodiment of this disclosure, the generating a palm print image having detailed texture information based on the palm crease energy image may include: generating the palm print image based on the palm crease energy image by using a second generator trained in advance.

In some embodiments, as shown in FIG. 3, the second generator 307 $G_{P \to R}$ may be used to convert the PCE image 305 in the PCE domain (P) to the palm print image domain (R), to generate a vivid palm print by using the PCE image 305 as an ID condition. To generate the diversified palm print images, the random noise vector may be used as the control vector 306, and is inputted into $G_{P \to R}$ in a latent vector manner, to reproduce various detailed textures such as light, shadow, and skin textures.

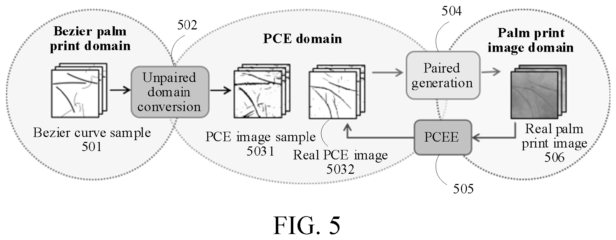

According to this embodiment of this disclosure, the first generator and the second generator may be jointly trained by using a real palm print image. Therefore, a jointly training process of models used in the method for generating a palm print image in this disclosure is described below with reference to FIG. 5 to FIG. 8.

FIG. 5 is a schematic diagram of field conversion at jointly training according to an embodiment of this disclosure.

As shown in FIG. 5, similar to the palm print image generation process described above with reference to FIG. 2 to FIG. 4B, in the jointly training process in this disclosure, conversion from the Bezier palm print domain to the PCE domain at the first generation stage and conversion from the PCE domain to the palm print image domain at the second generation stage are also involved.

At the first generation stage, a PCE image sample 5031 is obtained through conversion from a Bezier curve sample 501. Because there is no supervision information, the conversion is unpairing domain conversion 502.

At the second generation stage, a cycle conditional generation model is introduced. A real palm print image 506 is used as the supervision information, and a PCEE 505 is used to extract a real PCE image 5032 from the real palm print image 506. Then, the PCE image sample 5031 and the real PCE image 5032 are paired to generate a palm print image sample (not shown) of the palm print image domain, thereby performing supervised learning by using the real palm print image. Thus, the jointly training the first generator and the second generator is supervised based on the real palm crease energy image.

According to this embodiment of this disclosure, in the jointly training, the first generator may use the Bezier curve sample as an input, and output a palm crease energy image sample comprising the crease information.

FIG. 6 is a schematic diagram of a first generation stage at jointly training according to an embodiment of this disclosure.

As shown in FIG. 6(a), at the first generation stage in the jointly training, similar to the foregoing descriptions about the first generation stage, a PCE image sample 602 in the PCE domain may be generated based on a Bezier curve sample 601 in the Bezier palm print domain by using the to-be-trained first generator $G_{B \to P}$.

FIG. 6(b) provides an exemplary structure of the first generator $G_{B \to P}$. A main structure of the first generator $G_{B \to P}$ may be an encoder-decoder network based on a residual block RB 610, and according to this embodiment of this disclosure, the first generator may include a line feature enhancement block (LFEB) 620 configured to enhance a line energy feature of a multi-channel feature map of the Bezier curve sample 601.

Specifically, as shown in FIG. 6(b), a structure of an encoder of each layer of the first generator $G_{B \to P}$ may include the LFEB 620, a convolution layer (for example, Conv $7 \times 7$ or Conv $3 \times 3$), and an activation layer (for example, BN+ReLU), and a structure of a decoder of each layer may include a deconvolution layer (for example, DeConv $3 \times 3$) and an activation layer (for example, BN+ReLU and Tanh). The residual block RB 610 includes the convolution layer (for example, Conv $3 \times 3$), the activation layer (for example, BN+ReLU and Tanh), and a discarding layer (for example, Dropout).

Specifically, the line feature enhancement block LFEB 620 may be configured to implement line energy feature enhancement processing described above with reference to operation S202, and as shown in the foregoing formula (2), may include the following operations.

621: Subtract, for a feature map of each channel, an average value of the feature map, to obtain a high-frequency component feature in the feature map.

622: Extract line energy features from the high-frequency component feature through Gaussian-MFRAT core-based dilated convolution.

623: Obtain a line energy feature of the feature map from the line energy features through a maximum response operation.

Specifically, the maximum response operation means that a maximum line energy feature from a plurality of extracted line energy features is used as the line energy feature of the feature map.

624: Multiply the line energy feature of the feature map by a pre-set learning parameter S, and add a product to an original feature map (that is, a feature map before enhancement), to obtain a feature map of an enhanced line energy feature.

In this embodiment of this disclosure, the line feature enhancement block LFEB 620 is a lightweight plug-and-play block, to facilitate domain transmission and improve recognition performance.

In addition, as shown in FIG. 6(a), the first generation stage at the jointly training further includes obtaining a real PCE image 604 based on a real palm print image 603, to supervise training of the PCE image sample 602.

According to this embodiment of this disclosure, at the jointly training, the corresponding real PCE image is extracted from the real palm print image by using a palm crease energy extractor (PCEE).

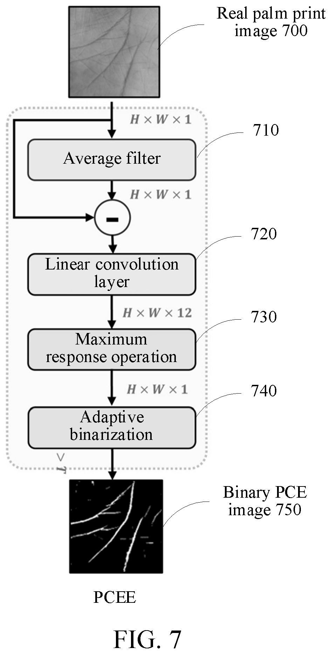

In this embodiment of this disclosure, the PCEE configured to extract the PCE image from a real palm print image may be designed, to generate the supervision information for the jointly training, so that the generated palm print image is more vivid. FIG. 7 is a schematic PCEE diagram of a palm crease energy extractor PCEE according to an embodiment of this disclosure. As shown in FIG. 7, similar to the foregoing descriptions about the line feature enhancement block, the palm crease energy extractor PCEE in this disclosure may include an average filter 710, a linear convolution layer 720, a maximum response operation layer 730, and an adaptive binarization layer 740. A real palm print image 700 is used as an input, to finally generate a binary PCE image 750.

According to this embodiment of this disclosure, the extracting the real palm crease energy image from the real palm print image by using a palm crease energy extractor may include:

extracting a set of real palm creases in the real palm print image by using the palm crease energy extractor;

determining a line energy feature of each pixel in the set of real palm creases; and

obtaining the real palm crease energy image through a binarization process based on the set of real palm creases and the line energy feature of each pixel in the set of real palm creases.

In some embodiments, as shown in FIG. 7, the average filter 710 is applied to subtract a filtering result from an original real palm print image 700, to obtain a high-frequency component feature, a line energy feature in the real palm print image 700, that is, line distribution of the set of real palm creases, is obtained through the linear convolution layer 720, and the linear convolution layer may be composed of several Gaussian-MFRAT cores along different directions.

In some embodiments, for each pixel in the set of real palm creases, maximum line orientation energy of the pixel may be determined as a line energy feature of the pixel based on line orientation energy of the pixel in each direction corresponding to each Gaussian-MFRAT core through the maximum response operation 730.

In some embodiments, a final PCE image may be obtained by using the adaptive binarization layer 740. For example, to highlight a main line, a binary threshold T may be set based on first 10% of a value of a line energy feature on an entire image.

According to this embodiment of this disclosure, in the jointly training, the second generator may use the real palm crease energy image of the real palm print image as an input, and use the palm print image corresponding to the real palm print image as an output, the palm print image including the detailed texture information.

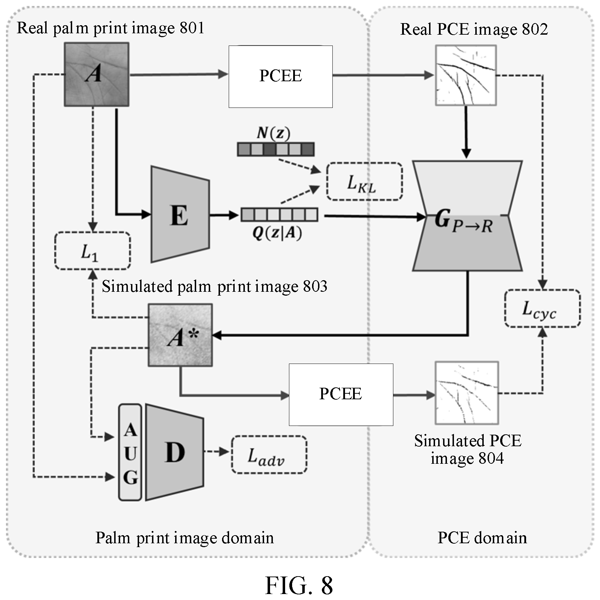

FIG. 8 is a schematic diagram of a second generation stage at jointly training according to an embodiment of this disclosure.

As shown in FIG. 8, at the second generation stage at the jointly training, a real palm print image 801 is used to participate in training. Similar to the foregoing descriptions, a PCEE is also used to extract a real PCE image 802 from the real palm print image 801. For example, a real PCE image $f_{PCEE}$(A) is generated from a real palm print image A through a PCEE, and then the real PCE image $f_{PCEE}$(A) may be inputted to a to-be-trained second generator $G_{P \to R}$, to obtain a simulated palm print image A* 803 having a set of palm creases consistent with the real PCE image $f_{PCEE}$(A).

In some embodiments, at the second generation stage in the jointly training, an encoder E may be used to map, through a re-parameterization method, the inputted real palm print image A to a hidden space Q(z|A) having an average value $\mu_Q$ and a variance $\sigma_Q^2$. The hidden space may conform to normal distribution Q(z|A) to $\mathrm{N}(\mu_Q,\ \sigma_Q^2)$, so that a hidden vector (that is, a control vector) configured to control generation of texture information is generated based on the hidden space.

In some embodiments, divergence of the hidden vector may be restricted at a training stage. For example, distribution $\mathrm{N}(\mu_Q,\ \sigma_Q^2)$ of the hidden space may be made to approximate to standard normal distribution N(0, 1), that is, the hidden space approximate to a standard normal space, so that a random noise z to N(0, 1) is easily sampled as the hidden vector, to generate diversified palm print details.

In addition, considering that directly performing training by using a small quantity of samples (few-shot training) may cause an overfitting problem of a discriminator, in this embodiment of this disclosure, before the generated simulated palm print image 803 and real palm print image 801 are fed to the discriminator D, the images may be extended by using a data enhancement module AUG, to generate more diversified training samples, thereby improving a generalization capability and robustness of the discriminator D. In addition, even if there are only the small quantity of samples for training, an overfitting risk of the discriminator D can be reduced, so that the discriminator D better adapts to different palm print image samples.

According to this embodiment of this disclosure, in the jointly training, generation processes of the first generator and the second generator may be supervised based on the real PCE image, and the palm crease energy extractor may be trained jointly with the first generator and the second generator.

In some embodiments, as shown in FIG. 6(a), the real PCE image 604 may be used to supervise generation of the PCE image sample 602. For example, the real PCE image 604 extracted from the real palm print image 603 may be used as an adversarial sample, to drive, by using an adversarial loss, a result generated by the first generator to be closer to the real PCE image 604, thereby optimizing generation quality of the PCE image.

In some embodiments, as shown in FIG. 8, a cyclic structure having the PCEE may be used at the second generation stage in the jointly training. The generated simulated palm print image A* is remapped back to a PCE domain $f_{PCEE}$(A*), that is, a simulated PCE image 804 is obtained. A difference between the real PCE image 803 and the simulated PCE image 804 is minimized, so that it is ensured that the simulated palm print image has consistent identity information with an original real palm print image. For example, distortion of the generated simulated palm print image A* may be restricted by minimizing a L1 distance between $f_{PCEE}$(A) and generated $f_{PCEE}$(A*), to strictly retain inputted ID information of the $f_{PCEE}$(A) and enhance realism of the generated simulated palm print image A* by using the discriminator D.

According to this embodiment of this disclosure, a loss function of the jointly training may include a first loss function related to the first generator and a second loss function related to the second generator.

The first loss function includes at least one of a contrastive loss configured to evaluate structural consistency between the palm crease energy image sample and the Bezier curve sample, and an adversarial loss configured to evaluate similarity between the palm crease energy image sample and the real palm crease energy image.

The second loss function includes at least one of a distribution control loss configured to evaluate similarity between a distribution of the control vectors for generation of the simulated palm print image sample and a standard normal distribution, an identity consistency loss configured to evaluate similarity between the simulated palm crease energy image sample and the real palm crease energy image (e.g., between the identity of the simulated palm print image and an identity of the real palm print image), a distortion loss configured to evaluate similarity between the simulated palm print image, and a discriminator loss configured to evaluate realism of the simulated palm print image sample.

As described above, in this disclosure, the jointly training may include jointly training on the first generator, the second generator, and the PCEE, and the PCEE is used as a connection between the first generator and the second generator. Therefore, loss functions of the entire training process may include loss functions corresponding to a generation process of the first generator and a generation process of the second generator.

In some embodiments, as shown in FIG. 6 (a), the loss function corresponding to the generation process of the first generator may include a contrastive loss $L_{CL}$ configured to maintain structure consistency and an adversarial loss $L_{adv}$ configured to make the palm print image more vivid.

For example, as shown in FIG. 6(a), to limit structural consistency between the Bezier curve sample $B$ and the PCE image sample $G_{B \to P}(B)$, the contrastive loss may be used. Specifically, a series of tiles may be cropped from $B$ *and* $G_{B \to P}(B)$. For a query tile $q$ in $G_{B \to P}(B)$, a corresponding tile at a same position in $B$ may be used as a positive sample $k^+$ of the query tile $q$, and another tile in $B$ may be used as a negative sample $\{k_i^-\}_{i=1}^N$ of the query tile. Therefore, a contrastive loss function may be constructed in a manner of making the positive sample be closer and the negative sample be farther from each other. For example, a contrastive loss $L_{CL}$ of applying a normalized mutual information neural estimation (InfoNCE) loss function may be represented as follows:

$$\mathcal{L}_{CL} = \sum_q -\log \frac{\exp\left(q \cdot k^+/\tau\right)}{\exp\left(q \cdot k^+/\tau\right) + \Sigma_{i=1}^N \exp\left(q \cdot k_i^-/\tau\right)} \quad (3)$$

where $\tau$ is a temperature hyper-parameter.

Therefore, the loss function corresponding to the generation process of the first generator may be represented as follows:

$$\mathcal{L}_{stage1} = \lambda_1^1 \mathcal{L}_{CL} + \lambda_2^1 \mathcal{L}_{adv}\left(f_{PCEM}(A), G_{B \to P}(B)\right) \quad (4)$$

where $f_{PCEE}$ represents performing PCEE processing on an image A, A represents a random real palm print image, and $\lambda_1^1$ and $\lambda_2^1$ are two weights.

In some embodiments, as shown in FIG. 8, the loss function corresponding to the generation process of the second generator may include a distribution control loss $L_{KL}$ configured to make distribution of a control vector N(z) approximate to a standard normal distribution Q(z|A), an identity consistency loss $L_{cyc}$ configured to maintain identity consistency between an identity of the palm print image 803 generated by the second generator based on the real PCE image 802 and an identity of the real palm print image 801, and a generation loss $L_G$ configured to restrict distortion and enhance realism of the palm print image 803 generated by the second generator.

In some embodiments, the distribution control loss $L_{KL}$ may be represented as follows:

$$\mathcal{L}_{KL} = -\frac{1}{2}(1 + \log \sigma_Q^2 - \sigma_Q^2 - \mu_Q^2) \quad (5)$$

In some embodiments, the identity consistency loss $L_{cyc}$ may be represented as follows:

$$\mathcal{L}_{cyc} = \| f_{PCEM}(A) - f_{PCEM}(G_{P \to R}(f_{PCEM}(A)) \|_1 \quad (6)$$

In some embodiments, the generation loss $L_G$ may include a distortion loss of $\mathcal{L}_1$ the palm print image 803 and a loss $\mathcal{L}_{adv}(\mathcal{T}(A), \mathcal{T}(A^*))$ of enhancing realism of the palm print image 803 for the discriminator, T() representing processing of the data enhancement module T. Therefore, the generation loss $L_G$ may be represented as follows:

$$\mathcal{L}_G = \lambda_1^2 \mathcal{L}_1(A, A^*) + \lambda_2^2 \mathcal{L}_{adv}(\mathcal{T}(A), \mathcal{T}(A^*)) \quad (7)$$

Therefore, the loss function corresponding to the generation process of the second generator may be represented as follows:

$$\mathcal{L}_{stage2} = \mathcal{L}_G + \lambda_3^2 \mathcal{L}_{KL} + \lambda_4^2 \mathcal{L}_{cyc} \qquad (8)$$

where $\lambda_1^2$, $\lambda_2^2$, $\lambda_3^2$ , and $\lambda_4^2$ represent weights of different loss terms.

Certainly, a manner for calculating the loss function provided above is merely used as an example, and is not limited in this disclosure. Other forms of loss functions may also be used in this disclosure.

Therefore, all parameters in the first generator, the second generator, and the PCEE may be determined by optimizing the loss function in the entire training process, to be applied to the palm print image generation process of this disclosure.

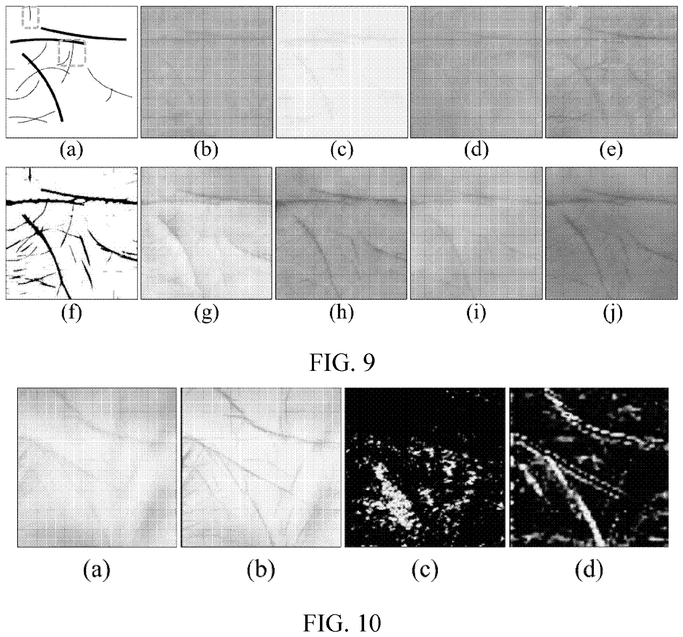

Performance verification on the method for generating a palm print image of this disclosure is presented below with reference to FIG. 9 and FIG. 10.

In some embodiments, in the performance verification, an experimental data set and an open set evaluation solution that are the same as those in the Bezier palm print generation method and the Realistic Pseudo-data Generation-Palm (RPG-Palm) palm print generation method may be followed. For example, performance of a recognition model pre-trained based on palm print images generated by using various palm print generation methods may be evaluated based on a TAR and a FAR. The TAR and the FAR respectively represent a "true acceptance rate" and a "false acceptance rate". In other words, the TAR may represent a proportion of a sample that is correctly recognized and correctly accepted, and may also be understood as an accuracy rate of the recognition model, the FAR represents a proportion of a sample that is incorrectly recognized and incorrectly accepted, and may also be understood as a false recognition rate of the recognition model. In addition, a Frechet inception distance (RFID) metric may be used to evaluate quality of the generated palm print image.

In some embodiments, the Bezier palm print generation method and the RPG palm print generation method may be followed, and 13 public data sets are used in the performance verification. The public data sets may come from various devices, and have a total of 3268 IDs and 59162 images. The region of interest (ROI) may be extracted by following a detect-then-crop solution.

In some embodiments, in the performance verification, 4000 identities may be generated based on the Bezier palm print generation method and the RPG palm print generation method, and each identity has 100 samples by default.

For the first generation stage, $\lambda_1^1$, $\lambda_2^1$ , and $\tau$ may be set to 1.0, 1.0, and 1.0, a learning rate is 0.0002 in first 30 training epochs, and linearly attenuates to to 1e-6 in last 30 training epochs. For the second generation stage, $\lambda_1^2$, $\lambda_2^2$, $\lambda_3^2$ , and $\lambda_4^2$ respectively set to 1.0, 10.0, 0.01, and 1.0, and a learning rate is 0.0002 in first 50 training epochs, and linearly attenuates to 1e-8 in last 50 training epochs. At a jointly training stage, an adaptive moment estimation (Adam) optimizer parameter is set to (0.5, 0.99). A resolution of all the images in the foregoing training may be set to 256×256.

In addition, to achieve fair performance comparison, a recognition model framework, that is, a residual network (ResNet) 50 and a mobile face recognition network (MobileFaceNet), that is the same as the palm print recognition model corresponding to the Bezier palm print generation method may be used, and a resolution of an input image is 224×224. The recognition model first performs pre-training on synthesized data in 25 training epochs, and then performs fine adjustment on a real data set in 50 training epochs. A compared baseline model is trained on the real data set in the 50 training epochs. An ArcFace (radian facial recognition method) method with a margin m=0.5 and a scale factor s=48 is configured for supervision of pre-training, fine adjustment, and baseline training, and maximum and minimum learning rates of the pre-training and the fine adjustment may be respectively set to 1e-2 and 1e-6. All the recognition models may be trained by using a mini batch stochastic gradient descent (SGD) method, where a batch size may be 128.

Therefore, based on the foregoing experimental setting, in this disclosure, first, performance of a recognition model in an open set protocol in which a training identity and a testing identity are completely isolated may be verified. In some embodiments, two different ratios of the training ID to the test ID may be used, for example, 1:1 and 1:3 (for example, training: tests are 1634:1632 and 818:2448). Quantification results are shown in the following Table 1, "MB" representing the MobileFaceNet, and "R50" representing the ResNet 50.

Table 1 Quantification results in an open set protocol

| Generation method | Recognition model framework | Train: Test=1:1 | | | | Train:Test=1:3 | | | |
|---|---|---|---|---|---|---|---|---|---|
| | | **TAR@** le-3 | TAR@ le-4 | TAR@ le-5 | TAR@ le-6 | TAR@ le-3 | TAR@ le-4 | **TAR@** 1e-5 | **TAR@** le-6 |
| CompCode | N/A | 0.4800 | 0.4292 | 0.3625 | 0.2 l03 | 0.4501 | 0.3932 | 0.3494 | 0.2648 |
| LLDP | N/A | 0.7382 | 0.6762 | 0.5222 | 0.1247 | 0.7372 | 0.6785 | 0.6171 | 0.2108 |

(continued)

| Generation method | Recognition model framework | Train: Test=1:1 | | | | Train:Test=1:3 | | | |
|---|---|---|---|---|---|---|---|---|---|
| | | TAR@ le-3 | TAR@ le-4 | TAR@ le-5 | TAR@ le-6 | TAR@ le-3 | TAR@ le-4 | TAR@ 1e-5 | TAR@ le-6 |
| BOCV | N/A | 0.4930 | 0.4515 | 0.3956 | 0.2103 | 0.4527 | 0.3975 | 0.3527 | 0.2422 |
| RLOC | N/A | 0.6490 | 0.5884 | 0.4475 | 0.1443 | 0.6482 | 0.5840 | 0.5224 | 0.3366 |
| DOC | N/A | 0.4975 | 0.4409 | 0.3712 | 0.1667 | 0.4886 | 0.4329 | 0.3889 | 0.2007 |
| PalmNet | N/A | 0.7174 | 0.6661 | 0.5992 | 0.1069 | 0.7217 | 0.6699 | 0.6155 | 0.2877 |
| C-LMCL | MB | 0.9290 | 0.8554 | 0.7732 | 0.6239 | 0.8509 | 0.7554 | 0.7435 | 0.5932 |
| ArcFace | MB | 0.9292 | 0.8568 | 0.7812 | 0.7049 | 0.8516 | 0.7531 | 0.6608 | 0.5825 |
| BézierPalm | MB | 0.9640 | 0.9438 | 0.9102 | 0.8437 | 0.9407 | 0.8861 | 0.7934 | 0.7012 |
| RPG-Palm | MB | 0.9802 | 0.9714 | 0.9486 | 0.8946 | 0.9496 | 0.9267 | 0.8969 | 0.8485 |
| Method according to this application | MB | **0.9873** | **0.9806** | **0.9547** | **0.9169** | **0.9674** | **0.9481** | **0.9317** | **0.9079** |
| C-LMCL | R50 | 0.9545 | 0.9027 | 0.8317 | 0.7534 | 0.8601 | 0.7701 | 0.6821 | 0.6254 |
| ArcFace | R50 | 0.9467 | 0.8925 | 0.8252 | 0.7462 | 0.8709 | 0.7884 | 0.7156 | 0.6580 |
| BézierPalm | R50 | 0.9671 | 0.9521 | 0.9274 | 0.8956 | 0.9424 | 0.8950 | 0.8217 | 0.7649 |
| RPG-Palm | R50 | 0.9821 | 0.9732 | 0.9569 | 0.9347 | 0.9533 | 0.9319 | 0.9016 | 0.8698 |
| Method according to this application | R50 | **0.9916** | **0.9879** | **0.9827** | **0.9762** | **0.9624** | **0.9626** | **0.9438** | **0.9271** |

As shown in Table 1, the method in this embodiment of this disclosure can improve the RPG palm print generation method with a clear margin, and achieve a highest performance level when the ratios of the training ID to the test ID are respectively set to 1:1 and 1:3. In addition, when the ratio of the training ID to the test ID is 1:3, improvement of the method in this embodiment of this disclosure is greater than improvement of the method when the ratio is 1:1. In other words, the method in this embodiment of this disclosure has significant effectiveness when there is less real data.

In addition, to verify performance of the method in this embodiment of this disclosure in limited training identities, models having different quantities of training identities (IDs) may be tested in an open set protocol in which the ratio of the training ID to the test ID is 1:1. Specifically, a total of 4000 pseudo IDs are synthesized in this authentication process, and each ID includes 100 pseudo palm prints. The same MobileFaceNet is used as recognition model frameworks of different methods, and quantification results are shown in the following Table 2.

Table 2 Performance under different quantities of real training identities

| Generation method | #ID | TAR@FAR= | | | |
|---|---|---|---|---|---|
| | | 1e-3 | 1e-4 | 1e-5 | 1e-6 |
| ArcFace | | 0.9292 | 0.8568 | 0.7812 | 0.7049 |
| BézierPalm | 1,600 | 0.9640 | 0.9438 | 0.9102 | 0.8437 |
| RPG-Palm | | 0.9802 | 0.9714 | 0.9486 | 0.8946 |
| Method according to this application | | **0.9873** | **0.9806** | **0.9547** | **0.9169** |
| ArcFace | | 0.8934 | 0.7432 | 0.7104 | 0.6437 |
| BézierPalm | 800 | 0.9534 | 0.9390 | 0.9025 | 0.8164 |
| RPG-Palm | | 0.9783 | 0.9687 | 0.9356 | 0.8741 |
| Method according to this application | | **0.9846** | **0.9718** | **0.9473** | **0.8976** |
| ArcFace | | 0.8102 | 0.7050 | 0.6668 | 0.3320 |
| BézierPalm | 400 | 0.9189 | 0.8497 | 0.7542 | 0.6899 |
| RPG-Palm | | 0.9573 | 0.9324 | 0.8836 | 0.8162 |
| Method according to this application | | **0.9679** | **0.9567** | **0.9259** | **0.8572** |

(continued)

| Generation method | #ID | TAR@FAR= | | | |
|---|---|---|---|---|---|
| | | 1e-3 | 1e-4 | 1e-5 | 1e-6 |
| ArcFace | 160 | 0.6761 | 0.5294 | 0.4783 | 0.2437 |
| BézierPalm | | 0.8179 | 0.6998 | 0.5826 | 0.4832 |
| RPG-Palm | | 0.9356 | 0.8641 | 0.8063 | 0.7246 |
| Method according to this application | | **0.9581** | **0.9247** | **0.8861** | **0.8245** |
| ArcFace | 80 | 0.5384 | 0.4682 | 0.3249 | 0.1173 |
| BézierPalm | | 0.6547 | 0.5511 | 0.4490 | 0.3743 |
| RPG-Palm | | 0.8974 | 0.8092 | 0.6947 | 0.5824 |
| Method according to this application | | **0.9421** | **0.9009** | **0.8438** | **0.7722** |
| ArcFace | 40 | 0.4582 | 0.3908 | 0.2505 | 0.0934 |
| BézierPalm | | 0.6218 | 0.5145 | 0.3937 | 0.3472 |
| RPG-Palm | | 0.8136 | 0.6942 | 0.5894 | 0.4796 |
| Method according to this application | | **0.9351** | **0.8881** | **0.8340** | **0.7694** |
| ArcFace | 16 | 0.4431 | 0.3758 | 0.2372 | 0.0723 |
| BézierPalm | | 0.5997 | 0.4883 | 0.3542 | 0.2978 |
| RPG-Palm | | 0.6958 | 0.5714 | 0.4286 | 0.3271 |
| Method according to this application | | **0.9058** | **0.8203** | **0.7469** | **0.6554** |

As shown in Table 2, when very few real IDs are used for training, the ArcFace method, the Bezier palm print generation method, and the RPG palm print generation method all become unavailable, and the method in this embodiment of this disclosure can still maintain performance. When training is performed by using only a 2.5% real ID (that is, 40), the method in this embodiment of this disclosure is still better than a result of the ArcFace method trained by using a 100% real ID (that is, 1600). When training is performed by using only a 1% real ID, a TAR of the method in this embodiment of this disclosure is still equivalent to a TAR trained with the ArcFace method by using a 50% real ID (that is, 800).

In some embodiments, palm print generation performance comparison may be performed by using four generation methods, namely, pix2pixHD, CycleGAN, BicycleGAN, and RPG-Palm, and retraining is performed by using 40 real IDs and based on unpaired data of the RPG-Palm. Quantification results are shown in Table 3.

Table 3 Quantification recognition results of different palm print generation methods under an open set protocol

| Generation method | FID↓ | Train: Test=1:1 (40 IDs) | | | |
|---|---|---|---|---|---|
| | | TAR↑ @1e-3 | TAR↑ @1e-4 | TAR↑ @1e-5 | TAR↑ @1e-6 |
| pix2pixHD | 218.1 | 0.6475 | 0.5062 | 0.3708 | 0.2431 |
| CycleGAN | 385.8 | 0.6982 | 0.5697 | 0.4312 | 0.3162 |
| BicycleGAN | 168.8 | 0.7472 | 0.6373 | 0.4978 | 0.3649 |
| RPG-Palm | 188.9 | 0.8136 | 0.6942 | 0.5894 | 0.4796 |
| Method according to this application | **40.3** | **0.9351** | **0.8881** | **0.8340** | **0.7694** |

As shown in Table 3, the palm print recognition model pre-trained based on the method in this embodiment of this disclosure is better than another method. In addition, in the method in this embodiment of this disclosure, an FID score of 40.3 can be achieved, which shows a significant improvement.

FIG. 9 is a comparison diagram of palm print generation results by using different palm print generation methods according to an embodiment of this disclosure. (a) corresponds to the Bezier palm print generation method, (b) corresponds to the pix2pixHD method, (c) corresponds to the CycleGAN method, (d) corresponds to the BicycleGAN method, (e) corresponds to the RPG-Palm method, (f) corresponds to the PCE image, and (g) to (j) correspond to the diversified palm print images generated by using the method in this embodiment of this disclosure.

As shown in FIG. 9, in a small amount of training data, in the palm print image generated by the RPG-Palm, severe blurring and inconsistent lines are shown, while the method in this embodiment of this disclosure still maintains overall definition and ID consistency. In addition, in the method in this embodiment of this disclosure, better detailed information about the palm crease may be recovered, including, for example, a change of the thickness and interlacing of a plurality of creases, rather than moving the set of Bezier curves. In addition, results of the pix2pixHD method, the CycleGAN method, and the BicycleGAN method show more serious blurring problems than the blurring problem of the RPG-Palm method.

In addition, to further enhance a line energy feature of an inputted palm print, in the method for generating a palm print image in this disclosure, the provided LFEB may further be applied to the palm print recognition model. For example, a plug-and-play LFEB is incorporated before a first convolution layer of a framework of the palm print recognition model, to enhance a line energy feature of an inputted palm print image.

The performance verification may further include studies on ablation. Main components of the method in this embodiment of this disclosure may include the PCEE, a data amplification (DA) module for few samples training, improved Bezier curve synthesis, a generation model having the LFEB, and a recognition model having the LFEB, which may be respectively represented by using "P", "A", "I", "G+L", and "R+L". For the baseline generation model, a two-stage training method may be used to remove the components. Therefore, in some embodiments, 40 IDs may be used to train an ablative experiment, and a test set is fixed under an open set protocol in which the ratio of the training ID to the test ID is 1:1. Results of the ablative experiment are shown in the following Table 4.

Table 4 Ablation of different components

| P | A | I | G+L | R+L | TAR@FAR= | | | |
|---|---|---|---|---|---|---|---|---|
| | | | | | le-3 | le-4 | le-5 | le-6 |
| ✗ | ✗ | ✗ | ✗ | ✗ | 0.6559 | 0.5503 | 0.4556 | 0.4144 |
| ✗ | ✗ | ✗ | ✗ | ✗ | 0.7936 | 0.7022 | 0.6149 | 0.5525 |
| ✓ | ✓ | ✗ | ✗ | ✗ | 0.8278 | 0.7449 | 0.6691 | 0.6077 |
| ✓ | ✓ | ✓ | ✗ | ✗ | 0.8464 | 0.7757 | 0.7094 | 0.6385 |
| ✓ | ✓ | ✓ | ✓ | ✗ | 0.8852 | 0.8238 | 0.7743 | 0.7060 |
| ✓ | ✓ | ✓ | ✓ | ✓ | **0.9351** | **0.8881** | **0.8340** | **0.7694** |

As shown in Table 4, the model having the PCEE achieves the largest performance improvement when 13.81% @FAR=1e-6 (that is, when FAR=1e-6, the TAR is 13.81%), which reflects superiority of the model having the PCEE in generating a vivid palm print sample with limited data. By comparing with the baseline generation and the recognition model, the LFEB module adds a significant and consistent performance gain of 6%@FAR=1e-6 by enhancing the palm crease energy feature. The DA module effectively extends intra-class diversity through a small quantity of training samples, to achieve improvement of 5.52%@FAR=1e-6. In addition, to improve the set of Bezier curves, better performance is achieved by introducing more proper palm crease distribution.

Finally, the performance verification may further include validity verification for the LFEB. FIG. 10 is a diagram of a result of validity verification for a line feature enhancement block according to an embodiment of this disclosure.

Features of one block in a layer in the MobileFaceNet having and not having the LFEB are visualized in FIG. 10. FIG. 10(a) is an inputted palm print image, FIG. 10(b) is a palm print image processed through the LFEB, FIG. 10(c) corresponds to feature visualization not having the LFEB, and FIG. 10(d) corresponds to feature visualization having the LFEB. Therefore, the model focuses on both the palm crease and a non-line region when the model does not have the LFEB, and the model may be biased to focus on the palm crease by adding an LFEB component.

As described above, through the method for generating a palm print image of this disclosure, the set of Bezier curves is generated by using the control points determined from the pre-set palm print curve template, and the set of Bezier curves is converted to the palm crease energy image having the crease information, the crease information including a set of palm creases having the same line distribution as the set of Bezier curves and a different line shape from the set of Bezier curves, and the line shape being determined by the line energy feature of each pixel. Then, the palm print image having the texture information is further generated based on the palm crease energy image having the crease information, and the set of palm creases of the palm print image is consistent with the crease information of the palm crease energy image, thereby generating the palm print image having the vivid crease and the vivid texture. The palm crease energy domain is introduced as the intermediate domain connecting the Bezier palm print domain and the palm print image domain, to avoid directly generating the palm print image having the crease information and the texture information from the set of Bezier curves, thereby reducing difficulty in generating the palm print image. In addition, in a process of generating the palm print image from the palm crease energy image, detailed texture information is generated and the palm print image may still have a set of consistent palm creases, so that a palm print image having diversified textures can be generated while retaining the same identity information. Therefore, the method reduces dependency on real data, and is applicable to palm print recognition training lacking a large-scale palm print data set.

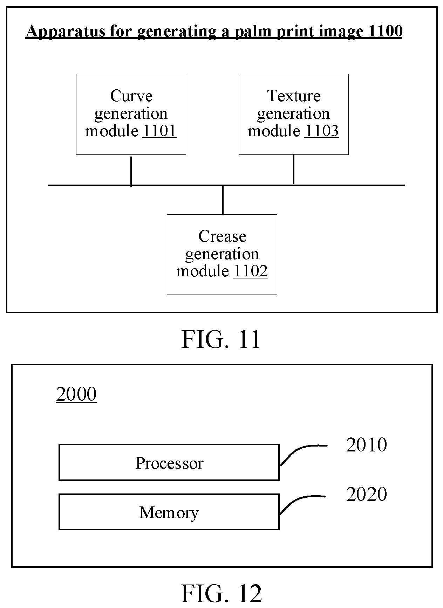

FIG. 11 is a schematic diagram of an apparatus for generating a palm print image 1100 according to an embodiment of this disclosure.

According to this embodiment of this disclosure, the apparatus for generating a palm print image 1100 may include a curve generation module 1101, a crease generation module 1102, and a texture generation module 1103.

The curve generation module 1101 may be configured to determine a plurality of control points based on a pre-set palm print curve template, and generate a set of Bezier curves based on the plurality of control points. In some embodiments, the curve generation module 1101 may perform the operation described above with reference to operation S201.

The crease generation module 1102 may be configured to generate a palm crease energy image having crease information based on the set of Bezier curves, the palm crease energy image comprising a set of palm creases having a same line distribution as the set of Bezier curves and a different line shape from the set of Bezier curves, and the line shape being configured for describing the crease information and corresponding to line orientation energy of each pixel on the set of palm creases. In some embodiments, the crease generation module 1102 may perform the operation described above with reference to operation S202.

The texture generation module 1103 may be configured to generate a palm print image having detailed texture information based on the palm crease energy image. In some embodiments, the texture generation module 1103 may perform the operation described above with reference to operation S203.

In some embodiments, the crease generation module 1102 is configured to: perform feature extraction on the set of Bezier curves, to obtain a multi-channel feature map of the set of Bezier curves; determine a line energy feature of each pixel in each per-channel feature map based on the multi-channel feature map; generate, by enhancing the line energy feature of each pixel, an enhanced multi-channel feature map; and generate the palm crease energy image based on the enhanced multi-channel feature map.

In some embodiments, the crease generation module 1102 is configured to perform the following processing on each per-channel feature map:

extracting line orientation energy of each pixel from the respective per-channel feature map by using a linear convolution layer, the linear convolution layer comprising a Gaussian modified finite Radon transform core in each of a plurality of pre-determined directions, and the line orientation energy comprising line orientation energy of the respective pixel in the plurality of pre-determined directions; and

obtaining the line energy feature of each pixel based on the line orientation energy, the line energy feature comprising maximum line orientation energy of the respective pixel in the plurality of pre-determined directions and a pre-determined direction corresponding to the maximum line orientation energy.

The texture generation module 1103 is configured to generate, by using a plurality of control vectors, the palm print image having a plurality of pieces of detailed texture information based on the palm crease energy image.

In some embodiments, the set of palm creases in the palm crease energy image indicates an identity of the palm print image.

In some embodiments, a control vector is a random noise vector, and the detailed texture information comprises at least one of light information, shadow information, and skin texture information.

In some embodiments, the crease generation module 1102 is configured to generate the palm crease energy image based on the set of Bezier curves by using a first generator trained in advance.

The texture generation module 1103 is configured to generate the palm print image based on the palm crease energy image by using a second generator trained in advance,
the first generator and the second generator being jointly trained by using a real palm print image.

In some embodiments, in the jointly training,

the first generator uses a Bezier curve sample as an input, and outputs a palm crease energy image sample comprising the crease information;

the second generator uses a real palm crease energy image of the real palm print image as an input, and outputs a palm print image sample comprising the detailed texture information;

the real palm crease energy image is extracted from the real palm print image by using a palm crease energy extractor;

the training the first generator and the second generator jointly is supervised based on the real palm crease energy image; and

the palm crease energy extractor is trained jointly with the first generator and the second generator.

In some embodiments, that the real palm crease energy image is extracted from the real palm print image by using the palm crease energy extractor includes:

extracting a set of real palm creases in the real palm print image by using the palm crease energy extractor;

determining a line energy feature of each pixel in the set of real palm creases; and

obtaining the real palm crease energy image through a binarization process based on the set of real palm creases and the line energy feature of each pixel in the set of real palm creases.

In some embodiments, the first generator includes a line feature enhancement block configured to enhance a line energy feature of a multi-channel feature map of the Bezier curve sample.

In some embodiments, a loss function of the jointly training includes a first loss function related to the first generator and a second loss function related to the second generator.

The first loss function includes at least one of a contrastive loss configured to evaluate structural consistency between the palm crease energy image sample and the Bezier curve sample, and an adversarial loss configured to evaluate similarity between the palm crease energy image sample and the real palm crease energy image; and

The second loss function includes at least one of a distribution control loss configured to evaluate similarity between a distribution of the control vectors and a standard normal distribution, an identity consistency loss configured to evaluate similarity between the identity of the palm print image sample and an identity of the real palm print image, a distortion loss configured to evaluate similarity between the palm print image sample and the real palm print image, and a discriminator loss configured to evaluate realism of the palm print image sample.

In some embodiments, the palm print curve template is pre-determined based on statistics obtained from a set of real palm creases of a human.

The curve generation module 1101 is configured to: generate, based on the palm print curve template, regions for the plurality of control points; and sample the regions to obtain the plurality of control points.

According to still another aspect of this disclosure, an electronic device is further provided. FIG. 12 is a schematic diagram of an electronic device 2000 according to an embodiment of this disclosure.

As shown in FIG. 12, the electronic device 2000 may include processing circuitry (e.g., at least one processors 2010) and at least one memories 2020. The memory 2020 includes a non-transitory computer-readable storage medium that stores computer-readable code (or instructions). When the computer-readable code is run by the at least one processors 2010, the method for generating a palm print image described above may be executed.

The processor in this embodiment of this disclosure may be an integrated circuit chip, and has a signal processing capability. The processor may be a general-purpose processor, a digital signal processor (DSP), an application-specific integrated circuit (ASIC), a field programmable gate array (FPGA), or another programmable logic device, a discrete gate or a transistor logic device, or a discrete hardware component. The methods, the steps, and logic block diagrams that are disclosed in the embodiments of this disclosure are performed and implemented. The general-purpose processor may be a microprocessor, or the processor may be any conventional processor or the like, or may be an X86 architecture or an ARM architecture

Generally, the various example embodiments of this disclosure may be implemented in hardware or a dedicated circuit, software, firmware, logic, or any combination thereof. Some aspects may be implemented in hardware, and another aspect may be implemented in firmware or software that may be executed by a controller, a microprocessor, or another computing device. When aspects of the embodiments of this disclosure are shown or described as block diagrams, flowcharts, or represented by using some other figures, blocks, apparatuses, systems, techniques, or methods described herein may be implemented in hardware, software, firmware, dedicated circuits or logic, general purpose hardware or a controller or another computing device, or some combination thereof as a non-restrictive example.

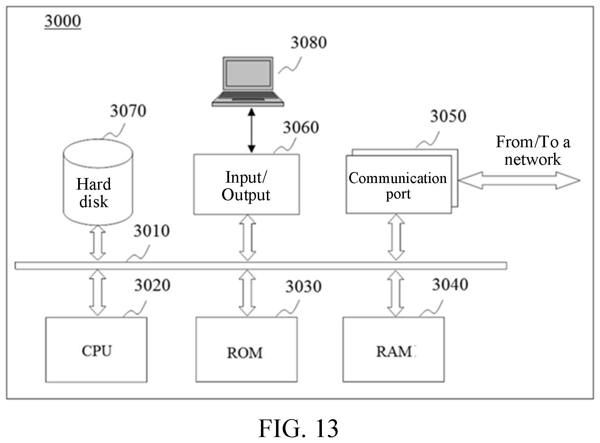

For example, the method or apparatus according to the embodiments of this disclosure may also be implemented with the help of an architecture of a computing device 3000 shown in FIG. 13. As shown in FIG. 13, the computing device 3000 may include a bus 3010, processing circuitry (e.g., at least one CPUs 3020), a read-only memory (ROM) 3030, a random access memory (RAM) 3040, a communication port 3050 connected to a network, an input/output component 3060, a hard disk 3070, and the like. A storage device, such as the ROM 3030 or the hard disk 3070, in the computing device 3000 may be a non-transitory computer-readable storage medium and may store various data or files for processing and/or communication in the method for generating a palm print image provided in this disclosure and program instructions executed by the CPU. The computing device 3000 may further include a user interface 3080. Certainly, the architecture shown in FIG. 13 is merely a non-limiting example, and when different devices are implemented, at least one components in the computing device shown in FIG. 13 may be omitted according to actual needs.

According to still another aspect of this disclosure, a computer-readable storage medium is further provided. The computer storage medium having computer-readable instructions stored therein. When the computer-readable instructions are executed by the processor, the method for generating a palm print image according to the embodiments of this disclosure described with reference to the foregoing accompanying drawings may be performed. In some examples, the computer-readable storage medium in at least one embodiments of this disclosure may be a non-transitory computer-readable storage medium configured to store executable instructions. The computer-readable storage medium in this embodiment of this disclosure may be a volatile memory or a non-volatile memory, or may include both a volatile memory and a non-volatile memory. The non-volatile memory may be a read-only memory (ROM), a programmable read-only memory (PROM), an erasable programmable read-only memory(EPROM), an electrically erasable programmable read-only memory (EEPROM), or a flash memory. The volatile memory may be a random access memory (RAM), and is used as an external cache. As non-limiting examples, many forms of RAMs are available, such as a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synchronous connected dynamic random access memory (SLDRAM), or a direct rambus random access memory (DRRAM). The memory in the method described in this specification may include the memories described herein and any other memory of a suitable type.

An embodiment of this disclosure further provides a computer program product or a computer program, the computer program product or the computer program including computer instructions stored in a non-transitory computer-readable storage medium. Processing circuitry (e.g., a processor) of the computer device reads the computer instructions from the non-transitory computer-readable storage medium, and the processor executes the computer instructions, so that the computer device performs the method for generating a palm print image according to the embodiments of this disclosure.

An embodiment of this disclosure provides a method for generating a palm print image and apparatus, a device, and a computer-readable storage medium.

Compared with at least one other palm print generation methods, in at least one embodiments of this disclosure, a palm crease energy domain can be introduced to decouple generation of a set of creases and the corresponding textures of a palm print, so that a set of Bezier curves of a Bezier palm print domain is converted to a palm crease energy image of the palm crease energy domain, to generate a set of vivid creases, and the palm crease energy image of the palm crease energy domain is converted to a palm print image of a palm print image domain, to generate a set of vivid textures, thereby reducing difficulty in generating a palm print image from the set of Bezier curves, and generating diversified palm print images.

In at least one embodiments of this disclosure, the set of Bezier curves is generated by using control points determined from a pre-set palm print curve template, and the set of Bezier curves is converted to a palm crease energy image having crease information, the crease information including a set of palm creases having the same line distribution as the set of Bezier curves and a different line shape from the set of Bezier curves, and the line shape being determined by a line energy feature of each pixel. Then, a palm print image having texture information is further generated based on the palm crease energy image having the crease information, and the set of palm creases of the palm print image is consistent with the crease information of the palm crease energy image, thereby generating a palm print image having the set of vivid creases and the corresponding vivid textures. In the method provided in this embodiment of this disclosure, the palm crease energy domain is introduced as an intermediate domain connecting the Bezier palm print domain and the palm print image domain, to avoid directly generating the palm print image having the crease information and the texture information from the set of Bezier curves, thereby reducing difficulty in generating the palm print image. In addition, in a process of generating the palm print image from the palm crease energy image, detailed texture information is generated and the palm print image may still have a set of consistent palm creases, so that a palm print image having diversified textures can be generated while retaining the same identity information. Therefore, the method reduces dependency on real data, and is applicable to palm print recognition training lacking a large-scale palm print data set.

Flowcharts and block diagrams in the drawings illustrate architectures, functions, and operations that may be implemented by using the system, the method, and the computer program product according to various embodiments of this disclosure. In this way, each block in the flowchart or the block diagram may represent a module, a program segment, or a part of code. The module, the program segment, or the part of the code include at least one executable instruction for implementing specific logical functions. In some alternative implementations, the functions noted in the block may occur not in sequence noted in the drawings. For example, two blocks shown one after another may actually be executed substantially in parallel, or the two blocks may sometimes be executed in a reverse order. This depends on the functions involved. Each box in the block diagram and/or the flowchart and a combination of boxes in the block diagram and/or the flowchart may be implemented may using a dedicated hardware-based system configured to execute a specified function or operation, or may be implemented by using a combination of dedicated hardware and computer instructions.

In some examples, the various example embodiments of this disclosure may be implemented in hardware or a dedicated circuit, software, firmware, logic, or any combination thereof. Some aspects may be implemented in hardware, and another aspect may be implemented in firmware or software that may be executed by a controller, a microprocessor, or another computing device. When aspects of the embodiments of this disclosure are shown or described as block diagrams, flowcharts, or represented by using some other figures, blocks, apparatuses, systems, techniques, or methods described herein may be implemented in hardware, software, firmware, dedicated circuits or logic, general purpose hardware or a controller or another computing device, or some combination thereof as a non-restrictive example.

The foregoing detailed exemplary embodiments of this disclosure are merely illustrative rather than restrictive. A person skilled in the art needs to understand that various modifications and combinations may be made to these embodiments or features thereof without departing from the principle of this disclosure.

**Claims**

1. A method for generating a palm print image, executable by an electronic device, and comprising:

determining a plurality of control points based on a pre-set palm print curve template, and generating a set of Bezier curves based on the plurality of control points;
generating a palm crease energy image based on the set of Bezier curves, the palm crease energy image comprising a set of palm creases having a same line distribution as the set of Bezier curves and a different line shape from the set of Bezier curves, and the line shape depending on line orientation energy of each pixel on the set of palm creases; and
generating a palm print image having detailed texture information based on the palm crease energy image.

2. The method according to claim 1, wherein the generating a palm crease energy image based on the set of Bezier curves comprises:

performing feature extraction on the set of Bezier curves, to obtain a multi-channel feature map of the set of Bezier curves;
determining a line energy feature of each pixel in each per-channel feature map based on the multi-channel feature map;
generating, by enhancing the line energy feature of each pixel, an enhanced multi-channel feature map; and
generating the palm crease energy image based on the enhanced multi-channel feature map.

3. The method according to claim 2, wherein the determining a line energy feature of each pixel in each per-channel feature map based on the multi-channel feature map comprises:

extracting line orientation energy of each pixel from the respective per-channel feature map by using a linear convolution layer, the linear convolution layer comprising a Gaussian modified finite Radon transform core in each of a plurality of pre-determined directions, and the line orientation energy comprising line orientation energy of the respective pixel in the plurality of pre-determined directions; and
obtaining the line energy feature of each pixel based on the line orientation energy, the line energy feature comprising maximum line orientation energy of the respective pixel among the plurality of pre-determined directions and a pre-determined direction corresponding to the maximum line orientation energy.

4. The method according to any one of claims 1 to 3, wherein the generating a palm print image having detailed texture information based on the palm crease energy image comprises:
generating, by using a plurality of control vectors, the palm print image having a plurality of pieces of detailed texture information based on the palm crease energy image.

5. The method according to claim 4, wherein the set of palm creases in the palm crease energy image indicates an identity of the palm print image.

6. The method according to claim 4 or 5, wherein a control vector is a random noise vector, and the detailed texture information comprises at least one of light information, shadow information, and skin texture information.

7. The method according to any one of claims 4 to 6, wherein the generating a palm crease energy image based on the set of Bezier curves comprises:

generating the palm crease energy image based on the set of Bezier curves by using a first generator trained in advance; and
the generating a palm print image having detailed texture information based on the palm crease energy image comprises:

generating the palm print image based on the palm crease energy image by using a second generator trained in advance,

the first generator and the second generator being jointly trained by using a real palm print image.

8. The method according to claim 7, wherein in the jointly training,

the first generator uses a Bezier curve sample as an input, and outputs a palm crease energy image sample;

the second generator uses a real palm crease energy image of the real palm print image as an input, and outputs a palm print image sample comprising the detailed texture information;

the real palm crease energy image is extracted from the real palm print image by using a palm crease energy extractor;

the jointly training the first generator and the second generator is supervised based on the real palm crease energy image; and

the palm crease energy extractor is trained jointly with the first generator and the second generator.

9. The method according to claim 8, further comprising:

extracting a set of real palm creases in the real palm print image by using the palm crease energy extractor;

determining a line energy feature of each pixel in the set of real palm creases; and

obtaining the real palm crease energy image through a binarization process based on the set of real palm creases and the line energy feature of each pixel in the set of real palm creases.

10. The method according to any one of claims 7 to 9, wherein the first generator comprises a line feature enhancement block configured to enhance a line energy feature of a multi-channel feature map of the Bezier curve sample.

11. The method according to any one of claims 8 to 10, wherein a loss function of the jointly training comprises a first loss function related to the first generator and a second loss function related to the second generator,

the first loss function comprising at least one of a contrastive loss configured to evaluate structural consistency between the palm crease energy image sample and the Bezier curve sample, and an adversarial loss configured to evaluate similarity between the palm crease energy image sample and the real palm crease energy image; and

the second loss function comprising at least one of a distribution control loss configured to evaluate similarity between a distribution of the control vectors and a standard normal distribution, an identity consistency loss configured to evaluate similarity between the identity of the palm print image sample and an identity of the real palm print image, a distortion loss configured to evaluate similarity between the palm print image sample and the real palm print image, and a discriminator loss configured to evaluate realism of the palm print image sample.

12. The method according to any one of claims 1 to 11, wherein the palm print curve template is pre-set based on statistics obtained from a set of real palm creases of a human; and

the determining a plurality of control points based on a pre-set palm print curve template comprises:

generating regions, based on the palm print curve template; and

sampling the regions to obtain the plurality of control points.

13. An apparatus for generating a palm print image, comprising:

a curve generation module, configured to determine a plurality of control points based on a pre-set palm print curve template, and generating a set of Bezier curves based on the plurality of control points;

a crease generation module, configured to generate a palm crease energy image based on the set of Bezier curves, the palm crease energy image comprising a set of palm creases having a same line distribution as the set of Bezier curves and a different line shape from the set of Bezier curves, and the line shape depending on line orientation energy of each pixel on the set of palm creases; and

a texture generation module, configured to generate a palm print image having detailed texture information based on the palm crease energy image.

14. The apparatus according to claim 13, wherein the crease generation module is configured to: perform feature extraction on the set of Bezier curves, to obtain a multi-channel feature map of the set of Bezier curves; determine a line energy feature of each pixel in each per-channel feature map based on the multi-channel feature map; generate, by enhancing the line energy feature of each pixel, an enhanced multi-channel feature map; and generate the palm crease energy image based on the enhanced multi-channel feature map.

15. The apparatus according to claim 13 or 14, wherein the texture generation module is configured to generate, by using a plurality of control vectors, the palm print image having a plurality of pieces of detailed texture information based on the palm crease energy image.

16. The apparatus according to claim 13, wherein the crease generation module is configured to generate the palm crease energy image based on the set of Bezier curves by using a first generator trained in advance; and

the texture generation module is configured to generate the palm print image based on the palm crease energy image by using a second generator trained in advance,
the first generator and the second generator being jointly trained by using a real palm print image.

17. The apparatus according to any one of claims 13 to 16, wherein the palm print curve template is pre-set based on statistics obtained from a set of real palm creases of a human; and
the curve generation module is configured to: generate, based on the palm print curve template, regions for the plurality of control points; and sample the regions to obtain the plurality of control points.

18. An electronic device, comprising:

at least one processors; and
at least one memories, having a computer-executable program stored therein, and when the computer-executable program is executed by the at least one processors, performing the method according to any one of claims 1 to 12.

19. A computer program product, the computer program product being stored on a computer-readable storage medium and comprising computer instructions, and the computer instructions, when executed by a processor, causing a computer device to perform the method according to any one of claims 1 to 12.

20. A computer-readable storage medium, having computer-executable instructions stored therein, the instructions, when executed by a processor, being configured to implement the method according to any one of claims 1 to 12.

Significant
difference
Crease & Texture

Bezier
curve 101

Crease
consistency

Appearance
similarity

Real
palm print
image
102

PCE image
103

## FIG. 1

200

S201 — Determine a plurality of control points based on a pre-set palm print curve template, and generate a set of Bezier curves based on the plurality of control points

S202 — Generate a palm crease energy image based on the set of Bezier curves, the palm crease energy image including a set of palm creases having a same line distribution as the set of Bezier curves and a different line shape from the set of Bezier curves, and the line shape depending on line orientation energy of each pixel on the set of palm creases

S203 — Generate a palm print image having detailed texture information based on the palm crease energy image

## FIG. 2

Control point 301

Bezier palm print generator 302

Bezier curve 303

$G_{B \rightarrow P}$

First generator 304

PCE image 305

$N(z)$

Control vector 306

$G_{P \rightarrow R}$

Second generator 307

Simulated palm print image 308

**First generation stage 310**

**Second generation stage 320**

FIG. 3

EP 4 752 836 A1

FIG. 4A

MFRAT filter 410       Filtering result 411

Gaussian-MFRAT core 420       Filtering result 421

FIG. 4B

FIG. 5

(a)

Structure of the first generator $G_{B \rightarrow P}$

(b)

FIG. 6

Real palm print
image 700

$H \times W \times 1$

Average filter — 710

$H \times W \times 1$

$-$

Linear convolution
layer — 720

$H \times W \times 12$

Maximum
response operation — 730

$H \times W \times 1$

Adaptive
binarization — 740

Binary PCE
image 750

PCEE

FIG. 7

FIG. 8

FIG. 9

FIG. 10

**Apparatus for generating a palm print image 1100**

Curve
generation
module 1101

Texture
generation
module 1103

Crease
generation
module 1102

FIG. 11

2000

Processor — 2010

Memory — 2020

FIG. 12

FIG. 13

## INTERNATIONAL SEARCH REPORT

| International application No. |
| --- |
| **PCT/CN2024/123335** |

| A. | CLASSIFICATION OF SUBJECT MATTER |
| --- | --- |

G06T 11/00(2006.01)i;  G06V10/774(2022.01)i;  G06N3/0455(2023.01)i

According to International Patent Classification (IPC) or to both national classification and IPC

| B. | FIELDS SEARCHED |
| --- | --- |

Minimum documentation searched (classification system followed by classification symbols)

IPC: G06T, G06V, G06N

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, IEEE: 掌纹, 指纹, 生成, 合成, 模拟, 拟真, 曲线, 贝塞尔, 褶皱, 纹理, 能量, 线条, 线型, palm, finger, print, palmprint, generation, simulation, bezier, curve, wrinkle, textures, energy, line, type

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 118608635 A (TENCENT TECHNOLOGY (SHENZHEN) CO., LTD.) 06 September 2024 (2024-09-06)<br>description, paragraphs 47-118, and claims 1-16 | 1-20 |
| A | CN 116994297 A (TENCENT TECHNOLOGY (SHENZHEN) CO., LTD.) 03 November 2023 (2023-11-03)<br>description, paragraphs 105-136 | 1-20 |
| A | CN 115527079 A (TENCENT TECHNOLOGY (SHENZHEN) CO., LTD.) 27 December 2022 (2022-12-27)<br>entire document | 1-20 |
| A | CN 116168269 A (ALIPAY (HANGZHOU) INFORMATION TECHNOLOGY CO., LTD.) 26 May 2023 (2023-05-26)<br>entire document | 1-20 |
| A | US 2023075233 A1 (THE REGENTS OF THE UNIVERSITY OF CALIFORNIA) 09 March 2023 (2023-03-09)<br>entire document | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 December 2024** | **23 December 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/123335**

| Patent document cited in search report | | | Publication date (day/month/year) | Patent family member(s) | | | Publication date (day/month/year) |
|---|---|---|---|---|---|---|---|
| CN | 118608635 | A | 06 September 2024 | None | | | |
| CN | 116994297 | A | 03 November 2023 | None | | | |
| CN | 115527079 | A | 27 December 2022 | WO | 2023160048 | A1 | 31 August 2023 |
| | | | | HK | 40080401 | A1 | 22 September 2023 |
| | | | | US | 2023394869 | A1 | 07 December 2023 |
| | | | | KR | 20240115861 | A | 26 July 2024 |
| | | | | EP | 4451229 | A1 | 23 October 2024 |
| | | | | JP | 2024541581 | W | 08 November 2024 |
| CN | 116168269 | A | 26 May 2023 | None | | | |
| US | 2023075233 | A1 | 09 March 2023 | WO | 2021155301 | A1 | 05 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311546177